# EUROPEAN PATENT APPLICATION

(11) **EP 3 127 929 A1**
(43) Date of publication of application: **08.02.2017**
(21) Application number: 15772899.9
(22) Date of filing: 30.03.2015
(51) Int. Cl.: C08F 230/08, C08F 2/38, C08F 2/44, C08G 77/24, G02B 1/04

(54) **POLYMERIZABLE COMPOSITION CONTAINING REACTIVE FLUORINATED SILICONE COMPOUND**

(30) Priority: 31.03.2014 JP 2014074391
(71) Applicant: Nissan Chemical Industries, Ltd., Chiyoda-ku Tokyo 101-0054 (JP)
(72) Inventor: NAGASAWA, Takehiro, Funabashi-shi Chiba 274-0052 (JP); OHMORI, Kentaro, Funabashi-shi Chiba 274-0052 (JP)
(74) Representative: Hoffmann Eitle
(86) International application number: PCT/JP2015/059931
(87) International publication number: WO 2015/152154

(57) **Abstract**

The present invention provides a polymerizable composition suitable for producing a molding that maintains a high refractive index and a low Abbe's number, discoloration (thermal yellowing) resulting from high thermal hysteresis can be reduced, no Tg and a low CTE are exhibited, and has good mold release properties. A polymerizable composition comprising: 100 parts by mass of a reactive silicone compound (a) obtained by polycondensation, in the presence of an acid or a base, of a polycondensable compound containing at least a diarylsilicic acid compound A, an alkoxy silicon compound B having a phenyl group or a naphthyl group having at least one group having a polymerizable double bond, and an alkoxy silicon compound C containing a fluoro group; and 1 part by mass to 200 parts by mass of a (meth) acrylate compound (b), and a cured product and a material for high refractive index resin lens which are obtained from the polymerizable composition.

## Description

### TECHNICAL FIELD

The present invention relates to a polymerizable composition containing a reactive fluorine-containing silicone compound. Specifically, the present invention relates to a polymerizable composition that allows a cured product formed thereof to have excellent optical characteristics (high refractive index, low Abbe's number), high heat resistance (thermal-yellowing resistance), high dimensional stability toward temperature change (no Tg, low coefficient of thermal expansion), and excellent mold release properties.

### BACKGROUND ART

Plastic lenses are used for cellular-phone cameras, digital cameras, in-vehicle cameras, and the like, and required to have excellent optical characteristics satisfying the respective purposes of these apparatuses. Furthermore, according to the aspect of use, plastic lenses are required to have high durability, such as heat resistance and weather resistance, and high productivity for molding with high yields.

In recent years, for the purpose of reducing mounting costs, a method of package-mounting of camera modules by reflow soldering has been proposed, and hence, a plastic lens material to be used for the method is required to be resistant to high thermal hysteresis (for example, 260 °C) in a reflow soldering process. However, conventional plastic lenses have low heat resistance, and are difficult to sufficiently adjust to the reflow process.

In particular, out of a plurality of lenses used for a high resolution camera module, one lens serving as a wavelength correcting lens is required to be an optical material having a high refractive index and a low Abbe's number. However, as described in Patent Document 1, most of conventional materials proposed as materials having a high refractive index and a low Abbe's number as their characteristics have a heat resistance up to 200 °C, even if heat resistance is improved, and have not assured to be resistant to heat, for example, at 260 °C at a reflow soldering process.

In the manufacture of resin lenses, for the purpose of improving yields and production efficiency, injection molding of thermoplastic resin has been shifting to press molding using a curable resin in a liquid state at room temperature. In particular, press molding is capable of yielding many lenses by laying many lenses in wafer-like form, and is thus very useful. Casting lens molding, that is, one of press molding methods, is lens molding performed not using an expensive optical glass, but using only a curable resin, and therefore, it can be said that casting lens molding is a method capable of maximally exerting the advantages of press molding, such as low cost and high production efficiency.

Typical casting lens molding is such that top and bottom molds each optically designed are precisely aligned, and then, a curable resin is poured into a gap between the molds, and the resin is heated up to around 160 °C via the molds, thereby being cured by heat. Then, the resin is cooled from the curing temperature to around room temperature, and released from the molds, whereby a lens wafer can be obtained.

As a heat-resistant lens material suitable for casting lens molding and resistant to a reflow soldering process, there has been proposed a composition produced by adding silica particles in high concentrations to a high-refractive-index monomer containing fluorene or naphthalene in order to achieve heat resistance and higher Tg (See Patent Document 2).

### Prior Art Documents

### Patent Documents

Patent Document 1: Japanese Patent Application Publication No. H09-31136 (JP H09-31136 A)
Patent Document 2: International Publication WO 2011/093144 Pamphlet

### SUMMARY OF THE INVENTION

### Problem to be Solved by the Invention

When strong shrinkage occurs due to a coefficient of thermal expansion (hereinafter, referred to as CTE) of a cured product in the cooling process after the curing in the above-described casting lens molding, a crack appears in the cured product, and accordingly, a lens wafer cannot be obtained. Furthermore, when the temperature passes the glass transition temperature (hereinafter, referred to as Tg) of the cured product at the time of the cooling, a stress at the time of the transition is accumulated in the cured product, and may cause a crack and displacement in the positions of lenses sooner or later.

Furthermore, in the cured product obtained from the composition described in Patent Document 2, the amount of change in optical characteristics before and after heat treatment is small, but the refractive index of the obtained cured product is originally small, and the Abbe's number of the obtained cured product is large. Thus, the method proposed in Patent Document 2 cannot achieve satisfactory optical characteristics, such as high refractive index and low Abbe's number, and it is hard to say that the method provides a material perfectly suitable for the production of a lens with high resolution.

Thus, there has not yet been provided a curable resin material that bears all the characteristics of: having optical characteristics (high refractive index, low Abbe's number) allowing the material to be used as a lens for high resolution camera modules, having satisfactory thermal-yellowing resistance suitable for a mounting process such as reflow soldering; having a high Tg or no Tg so as to be suitable for casting lens molding; having a low CTE; and having mold release properties, and accordingly, such curable resin material has been desired to be developed.

The present invention has been made in consideration of such situations, and an object of the present invention is to provide a polymerizable composition with which a cured product maintains a high refractive index and a low Abbe's number, and discoloration (thermal yellowing) resulting from high thermal hysteresis can be reduced, no Tg and a low CTE are exhibited, and a molding having good mold release properties can be suitably produced.

### Means for Solving the Problem

As a result of intensive study to solve the problems described above, the inventors of the present invention have found that, when a specific (meth)acrylate compound is added besides a specific reactive fluorine-containing silicone compound, an obtained cured product (a molding) maintains a high refractive index and a low Abbe's number, and a dimensional change caused by high thermal hysteresis can be reduced, and furthermore, the obtained molding has excellent mold release properties. Thus, the inventors of the present invention have completed the present invention.

Specifically, the present invention relates to, as a first aspect, a polymerizable composition comprising: 100 parts by mass of a reactive silicone compound (a) obtained by polycondensation of a polycondensable compound in the presence of an acid or a base, the polycondensable compound containing at least a diarylsilicic acid compound A of Formula [1], an alkoxy silicon compound B of Formula [2], and an alkoxy silicon compound C of Formula [3]; and 1 part by mass to 200 parts by mass of a (meth)acrylate compound (b): 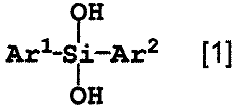 (where Ar¹ and Ar² are independently a phenyl group optionally substituted with a C₁₋₆ alkyl group, or a naphthyl group optionally substituted with a C₁₋₆ alkyl group)

Ar³-Si (OR¹) ₐR²₃₋ₐ [2]

(where Ar³ is a phenyl group having at least one group having a polymerizable double bond, or a naphthyl group having at least one group having a polymerizable double bond;
R¹ is methyl group or ethyl group; R² is methyl group, ethyl group, or vinylphenyl group; and a is 2 or 3)

Rf-Si (OR³)_{b}R⁴_{3-b} [3]

(where Rf is a C₁₋₁₂ fluoroalkyl group or a fluorophenyl group; R³ is methyl group or ethyl group; R⁴ is methyl group, ethyl group, or vinylphenyl group; and b is 2 or 3).

The present invention relates to, as a second aspect, the polymerizable composition according to the first aspect, in which the (meth)acrylate compound (b) is at least one selected from the group consisting of a fluorene compound D of Formula [4], a bisphenol compound E of Formula [5], and a polyfunctional (meth)acrylate compound F, and the polyfunctional (meth)acrylate compound F is a (meth)acrylate or alkoxylated (meth)acrylate of a polyol selected from the group consisting of trimethylolethane, trimethylolpropane, pentaerythritol, 2,2'-(oxybismethylene)bis(2-methylpropane-1,3-diol), ditrimethylolpropane, and dipentaerythritol: 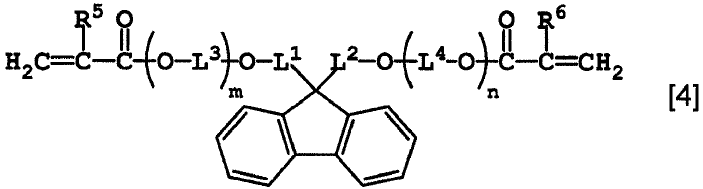 (where R⁵ and R⁶ are independently a hydrogen atom or methyl group; L¹ and L² are independently a phenylene group optionally having a substituent; L³ and L⁴ are independently a C₁₋₆ alkylene group; and m and n are 0 or a positive integer such that m + n satisfies 0 to 40) 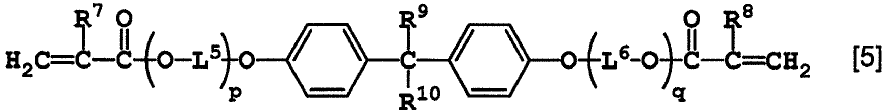 (where R⁷ and R⁸ are independently a hydrogen atom or methyl group; R⁹ and R¹⁰ are independently a hydrogen atom, methyl group, or trifluoromethyl group; L⁵ and L⁶ are independently a C₁₋₆ alkylene group; and p and q are 0 or a positive integer such that p + q satisfies 0 to 40).

The present invention relates to, as a third aspect, the polymerizable composition according to the second aspect, the polymerizable composition comprising at least two compounds, the fluorene compound D and the polyfunctional (meth)acrylate compound F, as the (meth)acrylate compound (b).

The present invention relates to, as a fourth aspect, the polymerizable composition according to the second aspect, the polymerizable composition comprising at least three compounds, the fluorene compound D, the bisphenol compound E, and the polyfunctional (meth)acrylate compound F, as the (meth)acrylate compound (b).

The present invention relates to, as a fifth aspect, the polymerizable composition according to any one of the first aspect to the fourth aspect, the polymerizable composition further comprising 0.01 parts by mass to 5 parts by mass of at least one stabilizer (c) selected from the group consisting of a light stabilizer G that is a compound having a group of Formula [6] and an antioxidant H that is a compound having a group of Formula [7]: 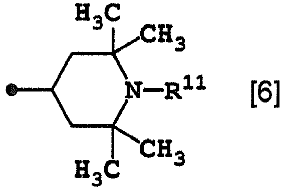 (where R¹¹ is a hydrogen atom, a C₁₋₁₀ alkyl group, or a C₁₋₁₂ alkoxy group; and a black dot is a bond) 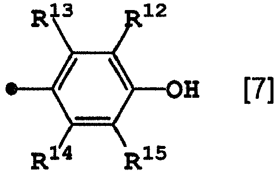 (where R¹² is a C₁₋₁₀ alkyl group; R¹³ to R¹⁵ are independently a hydrogen atom, or a C₁₋₁₀ alkyl group; and a black dot is a bond).

The present invention relates to, as a sixth aspect, the polymerizable composition according to any one of the first aspect to the fifth aspect, the polymerizable composition further comprising 0.01 parts by mass to 5 parts by mass of at least one sulfur compound (d) selected from the group consisting of thiol compounds I and disulfide compounds J.

The present invention relates to, as a seventh aspect, the polymerizable composition according to any one of the first aspect to the sixth aspect, in which the Rf is a group of Formula [8]:

**•-(CH₂)ᵣ-(CF₂)ₛ-X** [8]

(where X is a hydrogen atom or a fluorine atom; r is an integer of 0 to 2; s is an integer of 1 to 6; and a black dot is a bond to a silicon atom).

The present invention relates to, as an eighth aspect, the polymerizable composition according to any one of the first aspect to the seventh aspect, in which the diarylsilicic acid compound A is diphenylsilanediol, the alkoxy silicon compound B is a compound of Formula [2a], and the alkoxy silicon compound C is a compound of Formula [3a]: 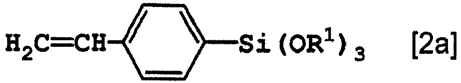 (where R¹ is the same as that defined above)

Rf-Si (OR³) ₃ [3a]

(where Rf and R³ are the same as those defined above).

The present invention relates to, as a ninth aspect, the polymerizable composition according to any one of the first aspect to the eighth aspect, in which the polycondensation molar ratio of the alkoxy silicon compound B to the alkoxy silicon compound C is in a range of from 99.9:0.1 to 90:10.

The present invention relates to, as a tenth aspect, a cured product obtained by polymerizing the polymerizable composition according to any one of the first aspect to the ninth aspect.

The present invention relates to, as an eleventh aspect, an optical lens obtained by polymerizing the polymerizable composition according to any one of the first aspect to the ninth aspect.

The present invention relates to, as a twelfth aspect, a material for high refractive index resin lenses, the material comprising the polymerizable composition according to any one of the first aspect to the ninth aspect.

The present invention relates to, as a thirteenth aspect, a reactive silicone compound obtained by polycondensation, in the presence of an acid or a base, of a polycondensable compound containing at least a diarylsilicic acid compound A of Formula [1], an alkoxy silicon compound B of Formula [2], and an alkoxy silicon compound C of Formula [3], at a molar ratio of (diarylsilicic acid compound A) / (alkoxy silicon compound B + alkoxy silicon compound C) of not less than 0.9 and less than 1.1: 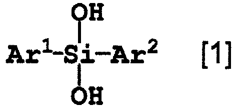 (where Ar¹ and Ar² are independently a phenyl group optionally substituted with a C₁₋₆ alkyl group, or a naphthyl group optionally substituted with a C₁₋₆ alkyl group)

Ar³-Si (OR¹) aR²₃₋ₐ [2]

(where Ar³ is a phenyl group having at least one group having a polymerizable double bond, or a naphthyl group having at least one group having a polymerizable double bond; R¹ is methyl group or ethyl group; R² is methyl group, ethyl group, or vinylphenyl group; and a is 2 or 3)

Rf-Si (OR³)_{b}R⁴_{3-b} [3]

(where Rf is a C₁₋₁₂ fluoroalkyl group; R³ is methyl group or ethyl group; R⁴ is methyl group, ethyl group, or vinylphenyl group; and b is 2 or 3).

### Effects of the Invention

A polymerizable composition of the present invention comprising a specific (meth)acrylate compound and a reactive silicone compound obtained by polycondensation of a polycondensable compound containing a specific diarylsilicic acid compound and a specific alkoxy silicon compound brings about a cured product thereof not only having desirable optical characteristics (high refractive index and low Abbe's number) as a lens for optical devices such as high resolution camera modules, but also having high heat resistance affecting discoloration and dimensional stability which are required for a mounting process for camera modules, and furthermore, having excellent mold release properties.

Therefore, a high refractive index resin lens material of the present invention comprising the polymerizable composition can be suitably used as a lens for high resolution camera modules.

Furthermore, the polymerizable composition of the present invention has a viscosity enabling the polymerizable composition to be sufficiently handled in solventless form, and therefore, a cured product can be suitably molded by applying press working with a mold such as a die (imprint technique).

### BRIEF DESCRIPTION OF THE DRAWINGS

[FIG. 1] FIG. 1 is a graph showing a ¹H NMR spectrum of a reactive fluorine-containing silicone compound obtained in Example 1.
[FIG. 2] FIG. 2 is a graph showing a ¹H NMR spectrum of a reactive silicone compound obtained in Production Example 1.
[FIG. 3] FIG. 3 illustrates the shape of a nickel mold used in Example 11.

### MODES FOR CARRYING OUT THE INVENTION

### «Polymerizable composition»

The present invention relates to a polymerizable composition comprising: 100 parts by mass of a reactive silicone compound (a) obtained by polycondensation of a polycondensable compound in the presence of an acid or a base, the polycondensable compound containing at least a diarylsilicic acid compound A of Formula [1] above, an alkoxy silicon compound B of Formula [2] above, and an alkoxy silicon compound C of Formula [3] above; and 1 part by mass to 200 parts by mass of a (meth)acrylate compound (b).

### <(a) Reactive silicone compound>

A reactive silicone compound (a) used in the present invention is a compound obtained by polycondensation of a polycondensable compound in the presence of an acid or a base, the polycondensable compound containing at least a diarylsilicic acid compound A having a specific structure, an alkoxy silicon compound B having a specific structure, and an alkoxy silicon compound C having a specific structure.

Each of the components will be described in detail below.

### <Polycondensable compound>

### [Diarylsilicic acid compound A]

The diarylsilicic acid compound A is a compound of Formula [1] below.

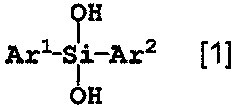

In Formula [1] above, Ar¹ and Ar² are independently a phenyl group optionally substituted with a C₁₋₆ alkyl group, or a naphthyl group optionally substituted with a C₁₋₆ alkyl group.

Examples of the phenyl group optionally substituted with a C₁₋₆ alkyl group, the phenyl group being represented by Ar¹ and Ar², include phenyl group, o-tolyl group, m-tolyl group, p-tolyl group, 4-ethylphenyl group, 4-isopropylphenyl group, 4-tert-butylphenyl group, 3,5-dimethylphenyl group, 3,5-diethylphenyl group, 3,5-diisopropylphenyl group, and 2,4,6-trimethylphenyl group.

Examples of the naphthyl group optionally substituted with a C₁₋₆ alkyl group, the naphthyl group being represented by Ar¹ and Ar², include 1-naphthyl group, 2-naphthyl group, 4-methylnaphthalene-1-yl group, and 6-methylnaphthalene-2-yl group.

Specific examples of the compound of Formula [1] above include diphenylsilanediol, di-p-tolylsilanediol, bis(4-ethylphenyl)silanediol, bis(4-isopropylphenyl)silanediol, and dinaphthylsilanediol, but the compound of Formula [1] is not limited to these.

### [Alkoxy silicon compound B]

The alkoxy silicon compound B is a compound of Formula [2] below.

Ar³-Si (OR¹) ₐR²₃₋ₐ [2]

In Formula [2] above, Ar³ is a phenyl group having at least one group having a polymerizable double bond, or a naphthyl group having at least one group having a polymerizable double bond; R¹ is methyl group or ethyl group; R² is methyl group, ethyl group, or vinylphenyl group; and a is 2 or 3.

Examples of the phenyl group having at least one group having a polymerizable double bond, the phenyl group being represented by Ar³, include 2-vinylphenyl group, 3-vinylphenyl group, 4-vinylphenyl group, 4-vinyloxyphenyl group, 4-allylphenyl group, 4-allyloxyphenyl group, and 4-isopropenylphenyl group.

Examples of the naphthyl group having at least one group having a polymerizable double bond, the naphthyl group being represented by Ar³, include 4-vinylnaphthalene-1-yl group, 5-vinylnaphthalene-1-yl group, 4-allylnaphthalene-1-yl group, 6-vinylnaphthalene-2-yl group, and 6-allylnaphthalene-2-yl group.

Specific examples of the compound of Formula [2] above include trimethoxy(4-vinylphenyl)silane, triethoxy(4-vinylphenyl)silane, trimethoxy(4-isopropenylphenyl)silane, dimethoxy(methyl)(4-vinylphenyl)silane, dimethoxybis(4-vinylphenyl)silane, trimethoxy(4-vinyl-1-naphthyl)silane, trimethoxy(5-vinyl-1-naphthyl)silane, and trimethoxy(6-vinyl-2-naphthyl)silane, but the compound of Formula [2] is not limited to these.

### [Alkoxy silicon compound C]

The alkoxy silicon compound C is a compound of Formula [3] below.

R_{f}-Si (OR³)_{b}R⁴_{3-b} [3]

In Formula [3] above, Rf is a C₁₋₁₂ fluoroalkyl group or a fluorophenyl group; R³ is methyl group or ethyl group; R⁴ is methyl group, ethyl group, or vinylphenyl group; and b is 2 or 3.

Among these, Rf is preferably a group of Formula [8].

**•-(CH₂)ᵣ-(CF₂)ₛ-X** [8]

In Formula [8] above, X is a hydrogen atom or a fluorine atom; r is an integer of 0 to 2; s is an integer of 1 to 6; and a black dot is a bond to a silicon atom.

Examples of the C₁₋₁₂ fluoroalkyl group represented by Rf include trifluoromethyl group, pentafluoroethyl group, heptafluoropropyl group, perfluorobutyl group, perfluoropentyl group, perfluorohexyl group, 2,2,2-trifluoroethyl group, 2,2,3,3,3-pentafluoropropyl group, 3,3,3-trifluoropropyl group, 2-(perfluorobutyl)ethyl group, 2-(perfluorohexyl)ethyl group, 2-(perfluorooctyl)ethyl group, 2-(perfluorodecyl)ethyl group, 2-(perfluoro-3-methylbutyl)ethyl group, 2-(perfluoro-5-methylhexyl)ethyl group, 2-(perfluoro-7-methyloctyl)ethyl group, 1H,1H,3H-tetrafluoropropyl group, 1H,1H,4H-hexafluorobutyl group, 1H,1H,5H-octafluoropentyl group, 1H,1H,7H-dodecafluoroheptyl group, 1H,1H,9H-hexadecafluorononyl group, and 1H-1-(trifluoromethyl)trifluoroethyl group.

Examples of the fluorophenyl group represented by Rf include 2-fluorophenyl group, 3-fluorophenyl group, 4-fluorophenyl group, 2,4,6-trifluorophenyl group, and perfluorophenyl group.

Specific examples of the compound of Formula [3] above include trimethoxy(trifluoromethyl)silane, trimethoxy(3,3,3-trifluoropropyl)silane, triethoxy(3,3,3-trifluoropropyl)silane, dimethoxy(methyl)(3,3,3-trifluoropropyl)silane, and dimethoxy(3,3,3-trifluoropropyl)(4-vinylphenyl)silane, but the compound of Formula [3] is not limited to these compounds.

### [Other polycondensable compounds]

The reactive silicone compound (a) used in the present invention may include other polycondensable compounds besides the above-described diarylsilicic acid compound A, the alkoxy silicon compound B, and the alkoxy silicon compound C.

The other polycondensable compounds are not limited to a particular compound as long as the other polycondensable compounds are compounds such as a hydrolysable silane compound other than the compounds A to C, which can be polycondensed with the compounds A to C.

Examples of the other polycondensable compounds include tetramethoxysilane, tetraethoxysilane, trimethoxy(methyl)silane, trimethoxy(vinyl)silane, 3-(meth)acryloyloxypropyl(trimethoxy)silane, trimethoxy(phenyl)silane, trimethoxy(1-naphthyl)silane, dimethoxy(dimethyl)silane, dimethoxy(diphenyl)silane, dimethoxy(methyl)(vinyl)silane, 3-(meth)acryloyloxypropyl(dimethoxy)(methyl)silane, and dimethoxy(methyl)(phenyl)silane.

### [Preferable example of reactive silicone compound]

The reactive silicone compound (a) is preferably a reactive silicone compound obtained by polycondensation of diphenylsilanediol as the diarylsilicic acid compound A, a compound of Formula [2a] below as the alkoxy silicon compound B, and a compound of Formula [3a] below as the alkoxy silicon compound C, in the presence of an acid or a base.

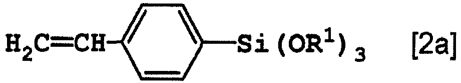

In Formula [2a] above, R¹ is the same as that defined above.

Rf-Si (OR³) 3 [3a]

In Formula [3a] above, Rf and R³ are the same as those defined above.

### [Blending ratio of diarylsilicic acid compound A to alkoxy silicon compounds B and C]

The blending molar ratio in a polycondensation reaction of the diarylsilicic acid compound A of Formula [1] to the alkoxy silicon compound B of Formula [2] and the alkoxy silicon compound C of Formula [3], each being used for the reactive silicone compound, is not limited to a particular value, but for the purpose of preventing the block copolymerization of the compounds, the blending molar ratio of the diarylsilicic acid compound A : the alkoxy silicon compounds B and C is normally preferably in a range of from 2:1 to 1:2. More preferably, the blending ratio is in a range of from 1.1:0.9 to 0.9:1.1.

The blending molar ratio in a polycondensation reaction of the alkoxy silicon compound B of Formula [2] to the alkoxy silicon compound C of Formula [3] is not limited to a particular value, but the blending molar ratio of the alkoxy silicon compound B : the alkoxy silicon compound C is normally preferably in a range of from 99.9:0.1 to 90:10.

It should be noted that in the case where, besides the compounds A to C, another polycondensable compound is contained as a polycondensable compound, the blending ratio is not limited to a particular value, but the polycondensable compound is normally preferably contained in 50 mol% or less with respect to the alkoxy silicon compound B.

A reactive silicone compound is also within the scope of the present invention, the reactive silicone compound being obtained by polycondensation, in the presence of an acid or a base, of a polycondensable compound containing at least the diarylsilicic acid compound A of Formula [1], the alkoxy silicon compound B of Formula [2], and the alkoxy silicon compound C of Formula [3], at a molar ratio of (diarylsilicic acid compound A) / (alkoxy silicon compound B + alkoxy silicon compound C) of not less than 0.9 and less than 1.1.

As the diarylsilicic acid compound A, the alkoxy silicon compound B, and the alkoxy silicon compound C described above, suitable compounds may be selected as necessary and used, and furthermore, a plurality of compounds may be used in combination. Also in this case, the molar ratio of the total of the diarylsilicic acid compounds A to the total of the alkoxy silicon compounds B and the alkoxy silicon compounds C is in the above-described range.

### [Acid or base catalyst]

A polycondensation reaction of the diarylsilicic acid compound A of Formula [1] and the alkoxy silicon compound B of Formula [2] and the alkoxy silicon compound C of Formula [3] (and other polycondensable compounds, if desired) is preferably carried out in the presence of an acid or a base catalyst.

The catalyst used for the polycondensation reaction is not particulaly limited as long as the catalyst can be dissolved or uniformly dispersed in a solvent described below, and such catalyst may be suitably selected and used as necessary.

Examples of the usable catalyst include B(OR)₃, Al(OR)₃, Ti(OR)₄, and Zr(OR)₄, as an acidic compound; alkali metal hydroxides, alkaline-earth metal hydroxides, ammonium salts, and amines as a base compound; and NH₄F and NR₄F, as a fluoride salt. Here, R is at least one selected from the group consisting of a hydrogen atom, a linear alkyl group having a carbon atom number of 1 to 12, a branched alkyl group having a carbon atom number of 3 to 12, and a cyclic alkyl group having a carbon atom number of 3 to 12.

Examples of the acidic compound include boric acid, trimethoxyboron, triethoxyboron, tri-n-propoxyboron, triisopropoxyboron, tri-n-butoxyboron, triisobutoxyboron, tri-sec-butoxyboron, tri-tert-butoxyboron, trimethoxyaluminum, triethoxyaluminum, tri-n-propoxyaluminum, triisopropoxyaluminum, tri-n-butoxyaluminum, triisobutoxyaluminum, tri-sec-butoxyaluminum, tri-tert-butoxyaluminum, tetramethoxytitanium, tetraethoxytitanium, tetra-n-propoxytitanium, tetraisopropoxytitanium (titanium tetraisopropoxide), tetra-n-butoxytitanium, tetraisobutoxytitanium, tetra-sec-butoxytitanium, tetra-tert-butoxytitanium, tetramethoxyzirconium, tetraethoxyzirconium, tetra-n-propoxyzirconium, tetraisopropoxyzirconium, tetra-n-butoxyzirconium, tetraisobutoxyzirconium, tetra-sec-butoxyzirconium, and tetra-tert-butoxyzirconium.

Examples of the base compound include sodium hydroxide, potassium hydroxide, magnesium hydroxide, calcium hydroxide, strontium hydroxide, barium hydroxide, ammonium hydroxide, tetramethylammonium hydroxide, tetrabutylammonium hydroxide, and triethylamine.

Examples of the fluoride salt include ammonium fluoride, tetramethylammonium fluoride, and tetrabutylammonium fluoride.

Among these catalysts, at least one catalyst selected from the group consisting of tetraisopropoxytitanium (titanium tetraisopropoxide), magnesium hydroxide, calcium hydroxide, strontium hydroxide, and barium hydroxide is preferably used.

The amount of the catalyst used is 0.01% by mass to 10% by mass, preferably 0.1% by mass to 5% by mass with respect to the total mass of the diarylsilicic acid compound and the alkoxy silicon compounds. When the amount of the catalyst used is 0.01% by mass or more, the reaction satisfactorily proceeds. In terms of economical efficiency, the use of 10% by mass or less of the catalyst is sufficient.

### [Polycondensation reaction]

The structure of the alkoxy silicon compound is one of the characteristics of the reactive silicone compound according to the present invention. A reactive group (polymerizable double bond) contained in the alkoxy silicon compound used in the present invention is easily radically or ionically (anionically, cationically) polymerized, and exhibits high heat resistance after being polymerized (cured).

When such alkoxy silicon compound and the diarylsilicic acid compound are polycondensed into a silicone compound having high heat-resistance, it is necessary to terminate the reaction at a proper degree of polymerization so as to keep a product in a liquid state. It should be noted that the alkoxy silicon compound used in the present invention is not positively hydrolyzed, and hence, the polycondensation reaction of the alkoxy silicon compound and the diarylsilicic acid compound moderately proceeds, and accordingly, the degree of the polymerization can be easily controlled.

The polycondensation reaction of the alkoxy silicon compound and the diarylsilicic acid compound by dealcoholization can be carried out without using a solvent, but a later-mentioned solvent that is inert toward an alkoxy silicon compound such as toluene can be used as a reaction solvent. An advantage of using no solvent is that alcohol, that is, a reaction byproduct can be more easily distilled off. In contrast, an advantage of using a reaction solvent is that a reaction system is easily made uniform, whereby the polycondensation reaction can be more stably carried out.

As described above, the synthesis reaction of the reactive silicone compound may be carried out without using a solvent, but there is no problem if a solvent is used in order to make a reaction system more uniform. The solvent is not particularly limited as long as the solvent does not react with the diarylsilicic acid compound and the alkoxy silicon compound and can dissolve a condensate thereof.

Examples of such reaction solvent include ketones, such as acetone and methyl ethyl ketone (MEK); aromatic hydrocarbons, such as benzene, toluene, and xylene; glycols, such as ethylene glycol, propylene glycol, and hexylene glycol; glycol ethers, such as ethyl cellosolve, butyl cellosolve, ethyl carbitol, butyl carbitol, diethyl cellosolve, and diethyl carbitol; and amides, such as N-methyl-2-pyrrolidone (NMP) and N,N-dimethylformamide (DMF). These solvents may be used singly or as a mixture of two or more of them. Among these, toluene is preferable.

The reactive silicone compound used in the present invention is obtained by dealcoholization condensation of the diarylsilicic acid compound A of Formula [1] and the alkoxy silicon compound B of Formula [2] and the alkoxy silicon compound C of Formula [3] (and other polycondensable compounds, if desired) in the presence of an acid or a base catalyst. The polycondensation reaction is preferably carried out without positively adding water, and for the purpose of preventing mixing of water, the reaction is preferably carried out in an atmosphere of inert gas, such as nitrogen gas. The reaction temperature is 20 °C to 150 °C, more preferably 30 °C to 120 °C.

The reaction time is not particularly limited as long as the time is equal to or longer than the time required for the completion of an increase in the molecular weight of a polycondensate and the stabilization of molecular weight distribution. More specifically, the reaction time is several hours to several days.

It is preferable that, after the polycondensation reaction is completed, the obtained reactive silicone compound is collected by any method, such as filtration or solvent distillation-off, and the collected compound is suitably subjected to a purification treatment as necessary.

The polycondensate obtained by such reaction has a weight average molecular weight Mw of 500 to 10,000, the weight average molecular weight being measured in terms of polystyrene by gel permeation chromatography (GPC), and the polycondensate has a degree of distribution, Mw (weight average molecular weight) / Mn (number average molecular weight), of from 1.0 to 10.

### <(b) (Meth)acrylate compound>

The (meth)acrylate compound (b) contained in the polymerizable composition of the present invention is preferably at least one selected from the group consisting of a fluorene compound D of Formula [4] below, a bisphenol compound E of Formula [5] below, and a polyfunctional (meth)acrylate compound F. It should be noted that, in the present specification, (meth)acrylate refers to both acrylate and methacrylate.

### [Fluorene compound D]

The fluorene compound D is a compound of Formula [4] below.

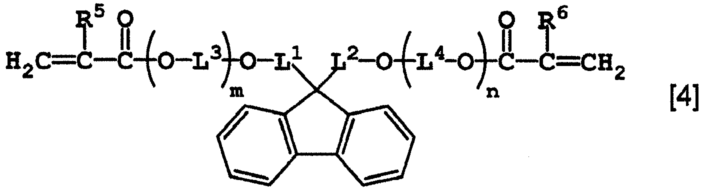

In Formula [4] above, R⁵ and R⁶ are independently a hydrogen atom or methyl group; L¹ and L² are independently a phenylene group optionally having a substituent; L³ and L⁴ are independently a C₁₋₆ alkylene group; and m and n are 0 or a positive integer such that m + n satisfies 0 to 40.

Examples of the phenylene group optionally having a substituent represented by L¹ and L² include o-phenylene group, m-phenylene group, p-phenylene group, 2-methylbenzene-1,4-diyl group, 2-chlorobenzene-1,4-diyl group, 2-bromobenzene-1,4-diyl group, 2-aminobenzene-1,4-diyl group, 2-methylbenzene-1,5-diyl group, 2-chlorobenzene-1,5-diyl group, 2-bromobenzene-1,5-diyl group, and 2-aminobenzene-1,5-diyl group. Among these, p-phenylene group is preferable.

Examples of the C₁₋₆ alkylene group represented by L³ and L⁴ include methylene group, ethylene group, trimethylene group, methylethylene group, tetramethylene group, 1-methyltrimethylene group, 2-methyltrimethylene group, 1,1-dimethylethylene group, pentamethylene group, 1-methyltetramethylene group, 2-methyltetramethylene group, 1,1-dimethyltrimethylene group, 1,2-dimethyltrimethylene group, 2,2-dimethyltrimethylene group, 1-ethyltrimethylene group, hexamethylene group, 1-methylpentamethylene group, 2-methylpentamethylene group, 3-methylpentamethylene group, 1,1-dimethyltetramethylene group, 1,2-dimethyltetramethylene group, 2,2-dimethyltetramethylene group, 1-ethyltetramethylene group, 1,1,2-trimethyltrimethylene group, 1,2,2-trimethyltrimethylene group, 1-ethyl-1-methyltrimethylene group, and 1-ethyl-2-methyltrimethylene group. Among these, ethylene group and methylethylene group are preferable.

In the compound of Formula [4], m and n are preferably such that m + n satisfies 0 to 30, more preferably such that m + n satisfies 2 to 20.

Specific examples of such fluorene compound D include 9,9-bis(4-(2-(meth)acryloyloxy)phenyl)-9H-fluorene;
9,9-bis(4-(2-(meth)acryloyloxyethoxy)phenyl)-9H-fluorene; ethoxylated (ethylene oxide modified) (9H-fluorene-9,9-diyl)bis(4,1-phenylene) di(meth)acrylate; propoxylated (propylene oxide modified) (9H-fluorene-9,9-diyl)bis(4,1-phenylene) di(meth)acrylate; OGSOL (registered trademark) EA-0200, OGSOL EA-F5003, OGSOL EA-F5503, and OGSOL EA-F5510 [manufactured by Osaka Gas Chemicals Co., Ltd.]; and NK Ester A-BPEF [manufactured by Shin Nakamura Chemical Co., Ltd.], but the fluorene compound D is not limited to these.

### [Bisphenol compound E]

The bisphenol compound E is a compound of Formula [5] below.

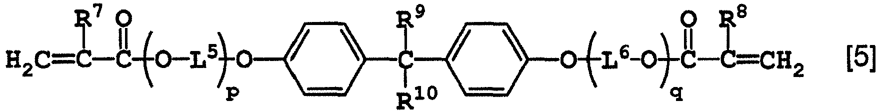

In Formula [5] above, R⁷ and R⁸ are independently a hydrogen atom or methyl group; R⁹ and R¹⁰ are independently a hydrogen atom, methyl group, or trifluoromethyl group; L⁵ and L⁶ are independently a C₁₋₆ alkylene group; and p and q are 0 or a positive integer such that p + q satisfies 0 to 40.

Examples of the C₁₋₆ alkylene group represented by L⁵ and L⁶ include the same groups as those exemplified as L³ and L⁴ in Formula [4] above. Among these, ethylene group and methylethylene group are preferable.

In the compound of Formula [5], p and q are preferably such that p + q satisfies 0 to 30, more preferably such that p + q satisfies 2 to 20.

Specific examples of such bisphenol compound E include bisphenol A di(meth)acrylate; ethoxylated (ethylene oxide modified) bisphenol A di(meth)acrylate (for example, 2.3 mol, 2.6 mol, 3 mol, 4 mol, 6 mol, 10 mol, 17 mol, or 30 mol of ethoxy group added); propoxylated (propylene oxide modified) bisphenol A di(meth)acrylate (for example, 3 mol of propoxy group added); ethoxylated/propoxylated (ethylene oxide modified / propylene oxide modified) bisphenol A di(meth)acrylate (for example, 6 mol of ethoxy group added and 12 mol of propoxy group added); ethoxylated (ethylene oxide modified) bisphenol F di(meth)acrylate (for example, 4 mol of ethoxy group added); ethoxylated (ethylene oxide modified) bisphenol AF di(meth)acrylate; NK Ester A-B1206PE, NK Ester ABE-300, NK Ester A-BPE-10, NK Ester A-BPE-20, NK Ester A-BPE-30, NK Ester A-BPE-4, NK Ester A-BPP-3, NK Ester BPE-80N, NK Ester BPE-100, NK Ester BPE-200, NK Ester BPE-500, NK Ester BPE-900, and NK Ester BPE-1300N [manufactured by Shin Nakamura Chemical Co., Ltd.]; BLEMMER (registered trademark) PDBE-200, BLEMMER PDBE-250, BLEMMER PDBE-450, and BLEMMER PDBE-1300 [manufactured by NOF CORPORATION]; and KAYARAD (registered trademark) R-712 [manufactured by Nippon Kayaku Co., Ltd.]. Among these, ethoxylated (ethylene oxide modified) bisphenol A di(meth)acrylate and propoxylated (propylene oxide modified) bisphenol A di(meth)acrylate are preferable.

### [Polyfunctional (meth)acrylate compound F]

The polyfunctional (meth)acrylate compound F is a (meth)acrylate or alkoxylated (meth)acrylate of a polyol selected from the group consisting of trimethylolethane, trimethylolpropane, pentaerythritol, 2,2'-(oxybismethylene)bis(2-methylpropane-1,3-diol), ditrimethylolpropane, and dipentaerythritol.

Examples of such polyfunctional (meth)acrylate compound F include trimethylolethane tri(meth)acrylate, trimethylolpropane tri(meth)acrylate, pentaerythritol tri(meth)acrylate, pentaerythritol tetra(meth)acrylate,
2,2'-(oxybismethylene)bis(2-methylpropane-1,3-diol) tri(meth)acrylate, 2,2'-(oxybismethylene)bis(2-methylpropane-1,3-diol) tetra(meth)acrylate, ditrimethylolpropane tri(meth)acrylate, ditrimethylolpropane tetra(meth)acrylate, dipentaerythritol penta(meth)acrylate, dipentaerythritol hexa(meth)acrylate, ethoxylated trimethylolethane tri(meth)acrylate, ethoxylated trimethylolpropane tri(meth)acrylate, ethoxylated pentaerythritol tri(meth)acrylate, ethoxylated pentaerythritol tetra(meth)acrylate, ethoxylated 2,2'-(oxybismethylene)bis(2-methylpropane-1,3-diol) tri(meth)acrylate, ethoxylated 2,2'-(oxybismethylene)bis(2-methylpropane-1,3-diol) tetra(meth)acrylate, ethoxylated ditrimethylolpropane tri(meth)acrylate, ethoxylated ditrimethylolpropane tetra(meth)acrylate, ethoxylated dipentaerythritol penta(meth)acrylate, and ethoxylated dipentaerythritol hexa(meth)acrylate. Among these, trimethylolpropane tri(meth)acrylate and ditrimethylolpropane tetra(meth)acrylate are preferable.

As the (meth)acrylate compound (b) contained in the polymerizable composition of the present invention, at least one selected from the group consisting of the fluorene compound D, the bisphenol compound E, and the polyfunctional (meth)acrylate compound F may be used singly or as a mixture of two or more of them.

The blending amount of the (meth)acrylate compound (b) is preferably 1 part by mass to 200 parts by mass, more preferably 20 parts by mass to 100 parts by mass with respect to 100 parts by mass of the reactive silicone compound (a).

In the case where a mixture of two or more of the compounds D to F is used as the (meth)acrylate compound (b), the fluorene compound D is preferably contained as an essential compound, and at least two compounds, the fluorene compound D and the polyfunctional (meth)acrylate compound F, are preferably contained for use.

In the case where a mixture of two or more of the compounds is used, for example, in the case where a mixture of the fluorene compound D and the polyfunctional (meth)acrylate compound F is used, the mass ratio is preferably such that fluorene compound D: polyfunctional (meth)acrylate compound F = 20:1 to 1:1.

Furthermore, in the case where a mixture of three compounds, the fluorene compound D, the bisphenol compound E, and the polyfunctional (meth)acrylate compound F, is used, the mixture is preferably used at mass ratios of fluorene compound D : (bisphenol compound E + polyfunctional (meth)acrylate compound F) =10:1 to 1:1, and bisphenol compound E : polyfunctional (meth)acrylate compound F = 10:1 to 1:10.

### <(c) Stabilizer>

In addition to the reactive silicone compound (a) and the (meth)acrylate compound (b), the polymerizable composition of the present invention may comprise at least one stabilizer selected from the group consisting of a light stabilizer G and an antioxidant H, as a component (c).

### [Light stabilizer G]

Among the components (c) used in the present invention, the light stabilizer G is a compound having a group of Formula [6] below.

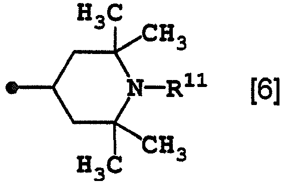

In the formula above, R¹¹ is a hydrogen atom, a C₁₋₁₀ alkyl group, or a C₁₋₁₂ alkoxy group; and a black dot is a bond.

Examples of the C₁₋₁₀ alkyl group represented by R¹¹ include methyl group, ethyl group, n-propyl group, isopropyl group, n-butyl group, isobutyl group, sec-butyl group, tert-butyl group, n-pentyl group, isoamyl group, neopentyl group, tert-amyl group, sec-isoamyl group, cyclopentyl group, n-hexyl group, cyclohexyl group, n-heptyl group, n-octyl group, n-nonyl group, and n-decyl group.

Examples of the C₁₋₁₂ alkoxy group represented by R¹¹ include methoxy group, ethoxy group, n-propoxy group, isopropoxy group, n-butoxy group, isobutoxy group, sec-butoxy group, tert-butoxy group, n-pentyloxy group, isoamyl oxy group, neopentyloxy group, tert-amyloxy group, sec-isoamyloxy group, cyclopentyloxy group, n-hexyloxy group, cyclohexyloxy group, n-heptyloxy group, n-octyloxy group, n-nonyloxy group, n-decyloxy group, and n-undecyloxy group.

Among these, a hydrogen atom, methyl group, cyclohexyloxy group, and n-octyloxy group are preferable as R¹¹.

Examples of such light stabilizer G include TINUVIN (registered trademark) 123, TINUVIN 144, TINUVIN 152, TINUVIN 292, and TINUVIN 770 [manufactured by BASF Japan Ltd.]; and ADK STAB (registered trademark) LA-52, ADK STAB LA-57, ADK STAB LA-63P, ADK STAB LA-68, ADK STAB LA-72, ADK STAB LA-77Y, ADK STAB LA-77G, ADK STAB LA-81, ADK STAB LA-82, and ADK STAB LA-87 [manufactured by ADEKA Corporation].

### [Antioxidant H]

Among the components (c) used in the present invention, the antioxidant H is a compound having a group of Formula [7] below:

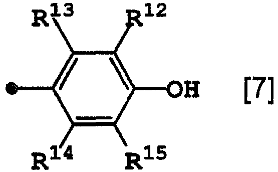

In the formula above, R¹² is a C₁₋₁₀ alkyl group; R¹³ to R¹⁵ are independently a hydrogen atom, or a C₁₋₁₀ alkyl group; and a black dot is a bond.

Examples of the C₁₋₁₀ alkyl group represented by R¹², and R¹³ to R¹⁵ include the same groups as those exemplified as R¹¹ in Formula [6] above. Among these, tert-butyl group is preferable as R¹².

Examples of such group of Formula [7] include
3-tert-butyl-4-hydroxy-5-methylphenyl group, 3-tert-butyl-4-hydroxy-6-methylphenyl group, and 3,5-di-tert-butyl-4-hydroxyphenyl group.

Examples of such antioxidant H include IRGANOX (registered trademark) 245, IRGANOX 1010, IRGANOX 1035, IRGANOX 1076, and IRGANOX 1135 [manufactured by BASF Japan Ltd.]; SUMILIZER (registered trademark) GA-80, SUMILIZER GP, SUMILIZER MDP-S, SUMILIZER BBM-S, and SUMILIZER WX-R [manufactured by Sumitomo Chemical Company, Limited]; and ADK STAB (registered trademark) AO-20, ADK STAB AO-30, ADK STAB AO-40, ADK STAB AO-50, ADK STAB AO-60, ADK STAB AO-80, and ADK STAB AO-330 [manufactured by ADEKA Corporation].

In the case where the component (c) is contained in the polymerizable composition of the present invention, the amount of the component (c) contained is preferably 0.01 parts by mass to 5 parts by mass, more preferably 0.05 parts by mass to 1 part by mass with respect to 100 parts by mass of the component (a).

It should be noted that, in the present invention, as the component (c), one light stabilizer G may be used singly, or two or more light stabilizers G may be used as a mixture, alternatively, one antioxidant H may be used singly, or two or more antioxidants H may be used as a mixture, or alternatively, at least one light stabilizer H and at least one antioxidant H may be used as a mixture. In the case where a plurality of the compounds are used as the component (c), the total amount of the plurality of the compounds contained is in the above-described range of the component (c) content.

### <(d) Sulfur compound>

In addition to the reactive silicone compound (a) and the (meth)acrylate compound (b), the polymerizable composition of the present invention may comprise, as a component (d), at least one sulfur compound selected from the group consisting of a thiol compound I and a disulfide compound J.

### [Thiol compound I]

Examples of the thiol compound I among the components (d) used in the present invention include mercaptocarboxylic acid esters, such as methyl mercaptoacetate, methyl 3-mercaptopropionate, 4-methoxybutyl 3-mercaptopropionate, 2-ethylhexyl 3-mercaptopropionate, n-octyl 3-mercaptopropionate, stearyl 3-mercaptopropionate, 1,4-bis(3-mercaptopropionyloxy)butane, 1,4-bis(3-mercaptobutyryloxy)butane, trimethylolethane tris(3-mercaptopropionate), trimethylolethane tris(3-mercaptobutyrate), trimethylolpropane tris(3-mercaptopropionate), trimethylolpropane tris(3-mercaptobutyrate), pentaerythritol tetrakis(3-mercaptopropionate), pentaerythritol tetrakis(3-mercaptobutyrate), dipentaerythritol hexakis(3-mercaptopropionate), dipentaerythritol hexakis(3-mercaptobutyrate), tris[2-(3-mercaptopropyloxy)ethyl] isocyanurate, and tris[2-(3-mercaptobutyryloxy)ethyl] isocyanurate; mercaptoalkanes, such as ethyl mercaptan, 1,2-dimercaptoethane, 1,3-dimercaptopropane, tert-butyl mercaptan, n-dodecanethiol, and tert-dodecanethiol; mercaptoalcohols, such as 2-mercaptoethanol and 4-mercapto-1-butanol; aromatic-ring-containing mercaptans, such as thiophenol, benzylthiol, m-toluenethiol, p-toluenethiol, 2-naphthalenethiol, 2-pyridylthiol, 2-mercaptobenzoimidazole, and 2-mercaptobenzothiazole; and silane-containing thiols, such as (γ-mercaptopropyl)trimethoxysilane and (γ-mercaptopropyl)triethoxysilane. Among these, mercaptoalkanes are preferable, and n-dodecanethiol is more preferable.

### [Disulfide compound J]

Examples of the disulfide compound J among the components (d) used in the present invention include alkyl disulfides, such as diethyl disulfide, dipropyl disulfide, diisopropyl disulfide, dibutyl disulfide, di-tert-butyl disulfide, dipentyl disulfide, diisopentyl disulfide, dihexyl disulfide, dicyclohexyl disulfide, didecyl disulfide, di-tert-dodecyl disulfide, bis(2-hydroxyethyl) disulfide, and bis(2,2-diethoxyethyl) disulfide; aromatic-ring-containing disulfides, such as diphenyl disulfide, ditoluyl disulfide, dibenzyl disulfide, 2,2'-dipyridyl disulfide, 2,2'-dibenzoimidazolyl disulfide, and 2,2'-dibenzothiazolyl disulfide; and thiuram disulfides, such as tetramethylthiuram disulfide, tetraethylthiuram disulfide, tetrabutylthiuram disulfide, and dipentamethylenethiuram disulfide. Among these, alkyl disulfides are preferable, and dodecyl disulfide is more preferable.

In the case where the component (d) is contained in the polymerizable composition of the present invention, the amount of the component (d) contained is preferably 0.01 parts by mass to 5 parts by mass, more preferably 0.1 parts by mass to 1 part by mass with respect to 100 parts by mass of the component (a).

It should be noted that, in the present invention, as the component (d), one thiol compound I may be used singly or two or more thiol compounds I may be used as a mixture, alternatively, one disulfide compound J may be used singly or two or more disulfide compounds J may be used as a mixture, or alternatively, at least one thiol compound I and at least one disulfide compound J may be used as a mixture. In the case where a plurality of the compounds are used as the components (d), the total amount of the plurality of the compounds contained is in the above-described range of the component (d) content.

### <(e) Polymerization initiator>

In addition to the component (a) and the component (b), or the component (a) to the component (d), the polymerizable composition of the present invention may comprise a polymerization initiator (e). As a polymerization initiator, any of a thermal polymerization initiator and a photopolymerization initiator may be used.

Examples of the thermal polymerization initiator include azos and organic peroxides.

Examples of a commercially available azo thermal polymerization initiator include V-30, V-40, V-59, V-60, V-65, and V-70 [manufactured by Wako Pure Chemical Industries, Ltd.].

Examples of a commercially available organic peroxide thermal polymerization initiator include Perkadox (registered trademark) CH, Perkadox BC-FF, Perkadox 14, Perkadox 16, Trigonox (registered trademark) 22, Trigonox 23, Trigonox 121, Kayaester (registered trademark) P, Kayaester O, and Kayabutyl (registered trademark) B [manufactured by Kayaku Akzo Corporation]; and PERHEXA (registered trademark) HC, PERCUMYL (registered trademark) H, PEROCTA (registered trademark) O, PERHEXYL (registered trademark) O, PERHEXYL Z, PERBUTYL (registered trademark) O, and PERBUTYL Z [manufactured by NOF CORPORATION], but the thermal polymerization initiator is not limited to these.

Examples of the photopolymerization initiator include alkylphenones, benzophenones, acylphosphine oxides, Michler's benzoylbenzoates, oxime esters, tetramethylthiuram monosulfides, and thioxanthones.

In particular, a photo-cleavage type photo-radical polymerization initiator is preferable. Examples of the photo-cleavage type photo-radical polymerization initiator include a photo-cleavage type photo-radical polymerization initiator described in "Saishin UV Kouka-Gijutsu (Latest UV Curing Technology)" (pp. 159, published by Kazuhiro Takausu, Technical Information Institute Co., Ltd., 1991).

Examples of a commercially available photo-radical polymerization initiator include IRGACURE (registered trademark) 184, IRGACURE 369, IRGACURE 651, IRGACURE 500, IRGACURE 819, IRGACURE 907, IRGACURE 784, IRGACURE 2959, IRGACURE CGI1700, IRGACURE CGI1750, IRGACURE CGI1850, IRGACURE CG24-61, IRGACURE TPO, Darocur (registered trademark) 1116, and Darocur 1173 [manufactured by BASF Japan Ltd.]; and ESACURE KIP150, ESACURE KIP65LT, ESACURE KIP100F, ESACURE KT37, ESACURE KT55, ESACURE KTO46, and ESACURE KIP75 [manufactured by Lamberti S.p.A.].

In the case where a polymerization initiator is added, one polymerization initiator may be used singly, or two or more of polymerization initiators may be used as a mixture. The amount of a polymerization initiator added is 0.1 parts by mass to 20 parts by mass, more preferably 0.3 parts by mass to 10 parts by mass with respect to 100 parts by mass of the reactive silicone compound (a).

### <Other additives>

Furthermore, other components, such as a reactive diluent, a chain transfer agent, an antioxidant, an ultraviolet absorber, a surfactant, a leveling agent, an antifoaming agent, and an adhesiveness improver, may be suitably added to the polymerizable composition of the present invention as necessary as long as the effects of the present invention are not impaired.

### <Method for preparing the polymerizable composition>

A method for preparing the polymerizable composition of present embodiment is not limited to a particular method. Examples of the preparation method include a method of mixing the component (a) and the component (b), and, if necessary, the components (c) to (e) at a predetermined proportion, and, if desired, further adding other additives thereto and mixing to form a uniform solution; and a method of using a conventional solvent in addition to these components.

In the case of using a solvent, the proportion of solid contents in the polymerizable composition is not limited to a particular value as long as each of the components is uniformly dissolved in the solvent, but for example, the proportion is 1% by mass to 50% by mass, 1% by mass to 30% by mass, or 1% by mass to 25% by mass. Here, the solid contents refer to components remaining after removing the solvent from all the components in the polymerizable composition.

The solution of the polymerizable composition is preferably used after being filtered with, for example, a filter having a pore size of 0.05 µm to 5 µm.

### < <Cured product»

The present invention relates to a cured product obtained by thermal- or photo-polymerization of the polymerizable composition.

Heating conditions in the thermal polymerization are not limited to particular conditions, but normally the conditions are suitably selected from the range of 50 °C to 300 °C and 1 minute to 120 minutes. The heating means is not limited to a particular means, but examples of the heating means include a hot plate and an oven.

Examples of the active ray used for the photopolymerization include ultraviolet rays, electron rays, and X-rays. As a light source used for ultraviolet irradiation, sunrays, a chemical lamp, a low-pressure mercury vapor lamp, a high-pressure mercury vapor lamp, a metal halide lamp, a xenon lamp, UV-LED, and the like may be used. Furthermore, after the photopolymerization, post-baking is performed, if necessary, specifically, heating is performed using a hot plate, an oven, or the like, normally at 50 °C to 300 °C for 1 to 120 minutes, whereby polymerization can be completed.

The cured product of the present invention has a high refractive index of 1.55 or higher at a wavelength of 589 nm, and furthermore, suppresses yellowing and cracks therein due to heating from occurring, and has dimensional stability, and hence, the cured product is useful as a curing relief patterning material, particularly, a material for high refractive index resin lenses, such as optical lenses.

### «Molding»

The resin composition of the present invention allows various moldings to be easily produced simultaneously with the formation of a cured product by using a conventional molding method, such as compression molding (for example, imprinting), casting, injection molding, or blow molding. The thus-obtained molding (for example, optical lens) is also within the scope of the present invention.

As the method for producing a molding, for example, a production method comprising the steps of: filling the resin composition of the present invention as mentioned above in between a bottom mold or a support and a top mold; heating the filled composition to perform thermal polymerization; and releasing the resultant thermal-polymerization product from the molds is preferable.

The above-described step of heating to perform thermal polymerization can be performed by applying the conditions described in the section «Cured product».

A molding produced by this method can be suitably used as a module lens for cameras.

### INDUSTRIAL APPLICABILITY

A cured product obtained from the polymerizable composition of the present invention has a high refractive index, and has a very low Abbe's number of 35 or less, which is required for a lens for high pixel cameras.

Furthermore, it has been confirmed that the cured product obtained from the polymerizable composition of the present invention does not have a clear glass transition point in a temperature range of, for example, from room temperature (25 °C) to 250 °C, that is, in this temperature range, when the expansion volume obtained through thermomechanical analysis (TMA) is time-differentiated, the minimum value of the differentiation curve is not a value of 0 or less (the minimum value is positive). These characteristics show that the cured product of the present invention has an excellent heat resistance such that, in a high temperature process, for example, in high thermal hysteresis of 260 °C at a reflow process, the occurrence of a crack and a change in dimension are suppressed.

Furthermore, the cured product obtained from the polymerizable composition of the present invention is particularly excellent in mold release properties.

As described above, the polymerizable composition of the present invention makes it possible to obtain a cured product having all of excellent optical characteristics, excellent heat-resistant dimensional stability, and excellent mold release properties, and therefore, the polymerizable composition can be particularly preferably used as a material for camera module lenses, which is suitable for casting lens molding. As a matter of course, the cured product also has transparency and hardness (strength) which are naturally required as a material for camera module lenses and the like.

### [Examples]

Hereinafter, the present invention will be described more specifically with reference to Examples, but the present invention is not limited to Examples below.

Apparatuses and conditions used for preparation of samples and analyses of physical properties in Examples will be listed below.

### (1)¹H NMR Spectrum

Apparatus: JNM-ECX300, manufactured by JEOL Ltd.
Measurement Solvent: CDCl₃
Reference Material: Tetramethylsilane (0.00 ppm)

### (2) Gel Permeation Chromatography (GPC)

Apparatus: GPC system, manufactured by SHIMADZU CORPORATION
Column: Shodex (registered trademark) GPC KF-804L, and GPC KF-803L, manufactured by Showa Denko K.K.
Column Temperature: 40 °C
Solvent: Tetrahydrofuran
Detector: UV (254 nm)
Calibration Curve: Standard polystyrene

### (3) Stirring defoaming apparatus

Apparatus: Planetary centrifugal mixer, "AWATORI RENTARO" (registered trademark) ARE-310, manufactured by THINKY CORPORATION

### (4) Refractive Index n_{D}, Abbe's Number v_{D}

Apparatus: Multi-wavelength Abbe refractometer, DR-M4, manufactured by ATAGO CO., LTD.
Measurement Temperature: 20 °C
Intermediate Liquid: Monobromonaphthalene

### (5) Reflow Oven

Apparatus: Table top type reflow oven, STR-3100, manufactured by SHINAPEX CO., LTD.

### (6) Light transmittance

Apparatus: Ultraviolet-visible spectrophotometer, UV-3100, manufactured by SHIMADZU CORPORATION

### (7) Coefficient of Thermal Expansion (CTE), Glass Transition Temperature Tg

Apparatus: Thermomechanical analyzer (TMA), TMA4000SA, manufactured by Bruker AXS K.K.
Mode: Tensile
Sample Length: 20 mm
Load: 10 g
Sweep Temperature: 25 °C to 250 °C
Temperature Rise Rate: 10 °C/min.

### (8) Nanoimprinter

Apparatus: NM-0801HB, manufactured by Meisyo Kiko, Co., Ltd.
Pressing Pressure: 250 N
Heating: 150 °C, 15 minutes

### Abbreviations mean as follows.

BPEA: ethoxylated bisphenol A diacrylate (4 mol of ethoxy group added) [NK ester A-BPE-4, manufactured by Shin Nakamura Chemical Co., Ltd.]
DTMP4A: ditrimethylolpropane tetraacrylate [NK Ester AD-TMP, manufactured by Shin Nakamura Chemical Co., Ltd.]
FDA: bisarylfluorene diacrylate [OGSOL (registered trademark) EA-F5503, manufactured by Osaka Gas Chemicals Co., Ltd.]
TMP3A: trimethylolpropane triacrylate [NK Ester A-TMPT, manufactured by Shin Nakamura Chemical Co., Ltd.]
GA80:
   3,9-bis(2-(3-(3-tert-butyl-4-hydroxy-5-methylphenyl)propionyloxy)-1,1 -dimethylethyl)-2 ,4,8,10-tetraoxospiro[5.5]undecane [SUMILIZER (registered trademark) GA-80, manufactured by Sumitomo Chemical Company, Limited]
T292: bis(1,2,2,6,6-pentamethyl piperidyne-4-yl) sebacate [TINUVIN (registered trademark) 292, manufactured by BASF Japan Ltd.]
DDT: n-dodecanethiol [manufactured by Tokyo Chemical Industry Co., Ltd.]
DS2: dodecyl disulfide [manufactured by Tokyo Chemical Industry Co., Ltd.]
POO: 2,4,4-trimethylpentane-2-yl peroxy-2-ethylhexanoate [PEROCTA (registered trademark) O, manufactured by NOF CORPORATION]

### [Example 1] Production of reactive fluorine-containing silicone compound (F-SC)

In a 200-mL eggplant-shaped flask equipped with a condenser, 43.3 g (0.200 mol) of diphenylsilanediol [manufactured by Tokyo Chemical Industry Co., Ltd.], 44.0 g (0.196 mol) of trimethoxy(4-vinylphenyl)silane [manufactured by Shin-Etsu Chemical Co., Ltd.], 0.873 g (0.004 mol) of trimethoxy(3,3,3-trifluoropropyl)silane [manufactured by Shin-Etsu Chemical Co., Ltd.], and 35 g of toluene were placed, and, using a nitrogen balloon, the air in the flask was purged with nitrogen. This reaction mixture was heated to 50 °C, and then, 38 mg (0.2 mmol) of barium hydroxide monohydrate [manufactured by Aldrich] was added thereto. The mixture was stirred as it was at 50 °C for 1 hour, and then, further stirred at 85 °C for 5 hours to perform dealcoholization condensation. The resultant reaction mixture was cooled to room temperature (approximately 25 °C), and insoluble matter was removed therefrom using a membrane filter having a pore size of 0.2 µm. Using a rotatory evaporator, toluene and methanol as a by-product were distilled off from this reaction mixture under reduced pressure at 50 °C to obtain 74.9 g of a reactive fluorine-containing silicone compound that was a colorless, transparent, oily substance.

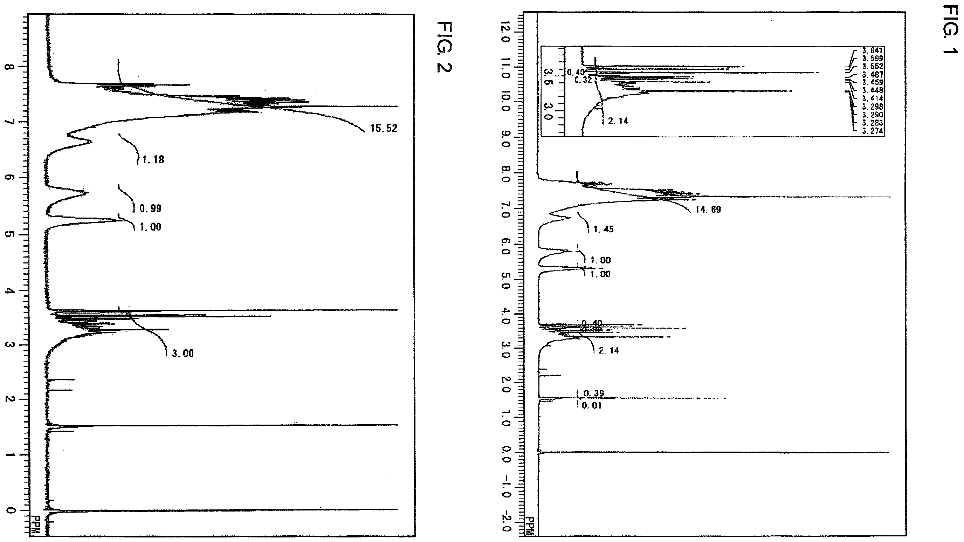

FIG. 1 shows a ¹H NMR spectrum of the obtained reactive fluorine-containing silicone compound. The weight average molecular weight Mw of the obtained reactive silicone compound, measured in terms of polystyrene by GPC, was 1,400, and the degree of distribution thereof, Mw (weight average molecular weight) / Mn (number average molecular weight), was 1.3.

### [Production Example 1] Production of reactive silicone compound (SC)

In a 1-L eggplant-shaped flask equipped with a condenser, 177 g (0.80 mol) of diphenylsilanediol [manufactured by Tokyo Chemical Industry Co., Ltd.], 179 g (0.80 mol) of trimethoxy(4-vinylphenyl)silane [manufactured by Shin-Etsu Chemical Co., Ltd.], and 141 g of toluene were placed, and, using a nitrogen balloon, the air in the flask was purged with nitrogen. This reaction mixture was heated to 50 °C, and then, 0.303 g (1.6 mmol) of barium hydroxide monohydrate [manufactured by Aldrich] was added thereto, and the mixture was further stirred at 50 °C for 2 days to perform dealcoholization condensation. The reaction mixture was cooled to room temperature (approximately 25 °C), and insoluble matter was removed therefrom using a membrane filter having a pore size of 0.2 µm. Using a rotatory evaporator, toluene and methanol as a by-product were distilled off from this reaction mixture under reduced pressure at 50 °C to obtain 305 g of a reactive silicone compound that was a colorless, transparent, oily substance.

FIG. 2 shows a ¹H NMR spectrum of the obtained reactive silicone compound. The weight average molecular weight, Mw, of the obtained reactive silicone compound, measured in terms of polystyrene by GPC, was 1,500, and the degree of distribution, Mw/Mn, was 1.3.

### [Example 2] Preparation of polymerizable composition

60 parts by mass of F-SC produced in Example 1 as a reactive silicone compound, 30 parts by mass of FDA, 5 parts by mass of BPEA, and 5 parts by mass of TMP3A, each as a (meth)acrylate compound, and 3 parts by mass of POO as a polymerization initiator were mixed, and stirred and defoamed at 2,000 rpm for approximately 30 minutes until the mixture was uniform, whereby Polymerizable Composition 1 was prepared.

### [Examples 3 to 10, Comparative Examples 1 and 2]

Polymerizable Compositions 2 to 11 were prepared in the same operation as in Example 1 except that each composition was changed as listed in Table 1.

### [Examples 11 to 20, Comparative Examples 3 and 4] Preparation and Evaluation of cured product

### [Evaluation of optical characteristics]

Each of the polymerizable compositions was sandwiched between two mold-release treated glass substrates together with a silicone rubber spacer having a thickness of 800 µm. This sandwiched polymerizable composition was heated in an oven under curing conditions listed in Table 2, and cooled to room temperature (approximately 25 °C), and then, the resultant cured product was released from the glass substrates, whereby a test piece having a diameter of 30 mm and a thickness of 800 µm was prepared.

The refractive index n_{D} in the D line (a wavelength of 589 nm) and the Abbe's number _{νD} of the obtained test piece were measured.

Furthermore, for the obtained test piece, each of the transmittances of light with a wavelength of 400 nm before and after a heating test using a reflow oven was measured, and a decrease in transmittance due to heating was evaluated. It should be noted that the heating test was performed by repeating the following 3 steps 3 times: 1) raising a temperature to 260 °C in 3 minutes, 2) maintaining the test piece at 260 °C for 20 seconds, and 3) allowing the test piece to cool to 50 °C.

The results are shown in Table 2.

### [Evaluation of physical properties]

Each of the polymerizable compositions was poured into a silicone mold of 200 µm thickness, the mold being formed by cutting out a 30 mm x 4 mm rectangular center portion therefrom and placed on a mold-release treated glass substrate, and the mold was covered from above with another mold-release treated glass substrate. The polymerizable composition in the mold sandwiched between these two glass substrates was heated in an oven under curing conditions listed in Table 2, and cooled to room temperature (approximately 25 °C), and then, the resultant cured product was released from the glass substrates, whereby a test piece having a length of 30 mm, a width of 4 mm, and a thickness of 200 µm was prepared.

Through TMA of the obtained test piece, the coefficient of thermal expansion (CTE) at 125 °C to 150 °C and the glass transition temperature Tg thereof were evaluated. As for Tg, when an expansion volume obtained through the TMA was time-differentiated, if the minimum value of the differentiation curve was 0 or less, a temperature corresponding to the minimum was taken as Tg, on the contrary, if the minimum value was positive, Tg was determined as "None". The results are shown in Table 2.

### [Evaluation of mold release properties]

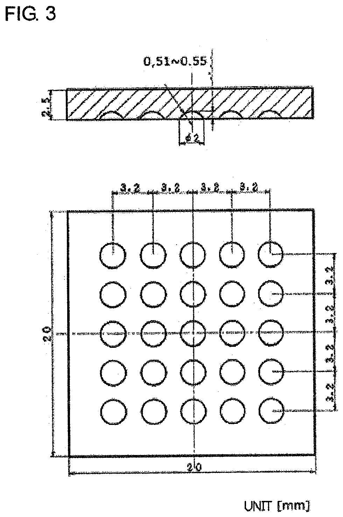

Using a nickel mold [manufactured by TDC Corporation, Lens Size: 2 mmφ x 0.5 mm in height, mirror-finished] illustrated in FIG. 3, each of the polymerizable compositions was formed into a convex lens on a glass substrate having a thickness of 0.7 mm by the use of a nanoimprinter. The mold release properties of the formed lens were visually evaluated in accordance with criteria below.

### <Criteria for mold release properties>

A: No residue of a cured product on the inner surface of the mold
B: Residues of a cured product were observed in less than 30 percent of the area of the inner surface of the mold.
C: Residues of a cured product were observed in 30 percent or more of the area of the inner surface of the mold.

**Table 1**

| Example/Comparative Example | Polymerizable Composition | Reactive silicone | | (Meth)acrylate | | Light stabilizer/Antioxidant | | Thiol/Disulfide | | Initiator | |
|---|---|---|---|---|---|---|---|---|---|---|---|
| | | | [part by mass] | | [part by mass] | | [part by mass] | | [part by mass] | | [part by mass] |
| Example 2 | Polymerizable Composition 1 | F-SC | 60 | FDA | 30 | Non e | - | None | - | POO | 3 |
| | | | | BPEA | 5 | | | | | | |
| | | | | TMP3A | 5 | | | | | | |
| Example 3 | Polymerizable Composition 2 | F-SC | 60 | FDA | 30 | T29 2 | 0.2 | None | - | POO | 3 |
| | | | | BPEA | 5 | | | | | | |
| | | | | TMP3A | 5 | | | | | | |
| Example 4 | Polymerizable Composition 3 | F-SC | 60 | FDA | 30 | GA 80 | 0.2 | None | - | POO | 3 |
| | | | | BPEA | 5 | | | | | | |
| | | | | TMP3A | 5 | | | | | | |
| Example 5 | Polymerizable Composition 4 | F-SC | 60 | FDA | 30 | Non e | - | DDT | 0.5 | POO | 3 |
| | | | | BPEA | 5 | | | | | | |
| | | | | TMP3A | 5 | | | | | | |
| Example 6 | Polymerizable Composition 5 | F-SC | 60 | FDA | 30 | GA 80 | 0.2 | DDT | 0.5 | POO | 3 |
| | | | | BPEA | 5 | | | | | | |
| | | | | TMP3A | 5 | | | | | | |
| Example 7 | Polymerizable Composition 6 | F-SC | 60 | FDA | 30 | GA 80 | 0.2 | DS2 | 0.5 | POO | 3 |
| | | | | BPEA | 5 | | | | | | |
| | | | | TMP3A | 5 | | | | | | |
| Example 8 | Polymerizable Composition 7 | F-SC | 60 | FDA | 30 | GA 80 | 0.2 | DDT | 0.5 | POO | 3 |
| | | | | BPEA | 5 | | | | | | |
| | | | | DTM4A | 5 | | | | | | |
| Example 9 | Polymerizable Composition 8 | F-SC | 60 | FDA | 40 | GA 80 | 0.2 | DDT | 0.5 | POO | 3 |
| Example 10 | Polymerizable Composition 9 | F-SC | 60 | FDA | 35 | GA 80 | 0.2 | DDT | 0.5 | POO | 3 |
| | | | | TMP3A | 5 | | | | | | |
| Comparative Example 1 | Polymerizable Composition 10 | None | - | FDA | 90 | GA 80 | 0.2 | DDT | 0.5 | POO | 3 |
| | | | | BPEA | 5 | | | | | | |
| | | | | TMP3A | 5 | | | | | | |
| Comparative Example 2 | Polymerizable Composition 11 | SC | 60 | FDA | 30 | GA 80 | 0.2 | DDT | 0.5 | POO | 3 |
| | | | | BPEA | 5 | | | | | | |
| | | | | TMP3A | 5 | | | | | | |

**Table 2**

| Example/Comparative Example | Polymerizable Composition | Curing conditions | | Refractive index n_{D} | Abbe's number ν_{D} | Transmittance (400 nm) [%] | | | CTE [ppm/K] | Tg [°C] | Mold release properties |
|---|---|---|---|---|---|---|---|---|---|---|---|
| | | Temperature [C°] | Time [min.] | | | Before heating | After heating | Difference | | | |
| Example 11 | Polymerizable Composition 1 | 150 | 10 | 1.59 | 29.2 | 88.6 | 86.2 | 2.4 | 121 | None | A |
| Example 12 | Polymerizable Composition 2 | 150 | 10 | 1.59 | 29.5 | 88.4 | 86.7 | 1.7 | 128 | None | A |
| Example 13 | Polymerizable Composition 3 | 150 | 10 | 1.59 | 29.5 | 88.8 | 87.3 | 1.5 | 124 | None | A |
| Example 14 | Polymerizable Composition 4 | 150 | 10 | 1.59 | 29.7 | 89.1 | 87.6 | 1.5 | 120 | None | A |
| Example 15 | Polymerizable Composition 5 | 135 | 15 | 1.59 | 29.5 | 88.7 | 88.4 | 0.3 | 128 | None | A |
| Example 16 | Polymerizable Composition 5 | 150 | 10 | 1.59 | 28.7 | 88.9 | 88.5 | 0.4 | 121 | None | A |
| Example 17 | Polymerizable Composition 6 | 150 | 10 | 1.59 | 29.5 | 88.8 | 88.2 | 0.6 | 125 | None | A |
| Example 18 | Polymerizable Composition 7 | 150 | 10 | 1.59 | 30.0 | 88.7 | 88.4 | 0.3 | 121 | None | A |
| Example 19 | Polymerizable Composition 8 | 150 | 10 | 1.60 | 35.3 | 88.8 | 88.2 | 0.6 | 123 | None | A |
| Example 20 | Polymerizable Composition 9 | 150 | 10 | 1.59 | 28.5 | 88.4 | 88.1 | 0.3 | 139 | None | A |
| Comparative Example 3 | Polymerizable Composition 10 | 150 | 10 | 1.60 | 27.6 | 88.7 | 88.3 | 0.4 | 144 | 106 | C |
| Comparative Example 4 | Polymerizable Composition 11 | 150 | 10 | 1.59 | 29.6 | 88.7 | 88.0 | 0.7 | 114 | None | C |

As listed in Table 2, it was confirmed that any of the cured products (Examples 11 to 20) obtained from the polymerizable compositions of the present invention did not have a clear Tg in the measurement temperature range (25 °C to 250 °C), and exhibited a low CTE of 120 ppm/K to 140 ppm/K, and hence, the polymerizable compositions of the present invention had dimensional stability which was very advantageous in the heating of the cured products thereof (for example, a reflow soldering process at 260 °C). Furthermore, the results revealed that any of the cured products obtained from the polymerizable compositions of the present invention had good mold release properties after molding. Furthermore, the results revealed that the cured products (Examples 11 to 18, and 20) obtained from the polymerizable compositions to which a specific polyfunctional (meth)acrylate compound F was added as the component (b) had a lower Abbe's number than the cured product (Example 19) to which the compound F was not added.

In contrast, it was confirmed that, in the cured product (Comparative Example 3) to which the reactive fluorine-containing silicone compound was not added, a clear Tg at 106 °C was observed, and hence, the cured product lacked dimensional stability in heating, and had insufficient mold release properties. Furthermore, it was confirmed that the cured product (Comparative Example 4) to which the reactive silicone compound having no fluorine group was added had insufficient mold release properties.

## Claims

1. A polymerizable composition comprising:
100 parts by mass of a reactive silicone compound (a) obtained by polycondensation of a polycondensable compound in the presence of an acid or a base, the polycondensable compound containing at least a diarylsilicic acid compound A of Formula [1], an alkoxy silicon compound B of Formula [2], and an alkoxy silicon compound C of Formula [3]; and
1 part by mass to 200 parts by mass of a (meth)acrylate compound (b): 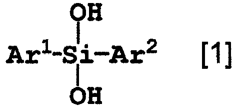 (where Ar¹ and Ar² are independently a phenyl group optionally substituted with a C₁₋₆ alkyl group, or a naphthyl group optionally substituted with a C₁₋₆ alkyl group)
**Ar³-Si (OR¹) ₐR²₃₋ₐ** **[2]**
(where Ar³ is a phenyl group having at least one group having a polymerizable double bond, or a naphthyl group having at least one group having a polymerizable double bond; R¹ is methyl group or ethyl group; R² is methyl group, ethyl group, or vinylphenyl group; and a is 2 or 3)
**Rf-Si (OR³)_{b}R⁴_{3-b}** **[3]**
(where Rf is a C₁₋₁₂ fluoroalkyl group or a fluorophenyl group; R³ is methyl group or ethyl group; R⁴ is methyl group, ethyl group, or vinylphenyl group; and b is 2 or 3).

2. The polymerizable composition according to claim 1, wherein the (meth)acrylate compound (b) is at least one selected from the group consisting of a fluorene compound D of Formula [4], a bisphenol compound E of Formula [5], and a polyfunctional (meth)acrylate compound F, and the polyfunctional (meth)acrylate compound F is a (meth)acrylate or alkoxylated (meth)acrylate of a polyol selected from the group consisting of trimethylolethane, trimethylolpropane, pentaerythritol, 2,2'-(oxybismethylene)bis(2-methylpropane-1,3-diol), ditrimethylolpropane, and dipentaerythritol: 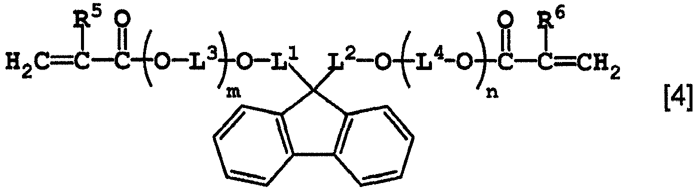 (where R⁵ and R⁶ are independently a hydrogen atom or methyl group; L¹ and L² are independently a phenylene group optionally having a substituent; L³ and L⁴ are independently a C₁₋₆ alkylene group; and m and n are 0 or a positive integer such that m + n satisfies 0 to 40) 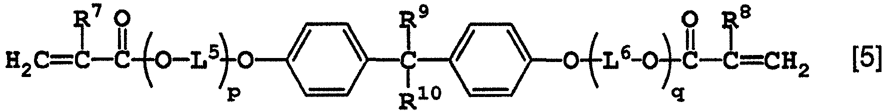 (where R⁷ and R⁸ are independently a hydrogen atom or methyl group; R⁹ and R¹⁰ are independently a hydrogen atom, methyl group, or trifluoromethyl group; L⁵ and L⁶ are independently a C₁₋₆ alkylene group; and p and q are 0 or a positive integer such that p + q satisfies 0 to 40).

3. The polymerizable composition according to claim 2, comprising at least two compounds, the fluorene compound D and the polyfunctional (meth)acrylate compound F as the (meth)acrylate compound (b).

4. The polymerizable composition according to claim 2, comprising at least three compounds, the fluorene compound D, the bisphenol compound E, and the polyfunctional (meth)acrylate compound F, as the (meth)acrylate compound (b).

5. The polymerizable composition according to any one of claims 1 to 4, further comprising 0.01 parts by mass to 5 parts by mass of at least one stabilizer (c) selected from the group consisting of a light stabilizer G that is a compound having a group of Formula [6] and an antioxidant H that is a compound having a group of Formula [7]: 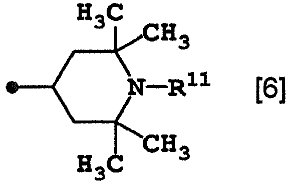 (where R¹¹ is a hydrogen atom, a C₁₋₁₀ alkyl group, or a C₁₋₁₂ alkoxy group; and a black dot is a bond) 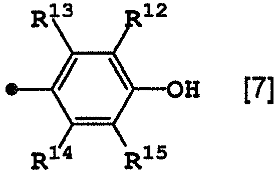 (where R¹² is a C₁₋₁₀ alkyl group; R¹³ to R¹⁵ are independently a hydrogen atom, or a C₁₋₁₀ alkyl group; and a black dot is a bond).

6. The polymerizable composition according to any one of claims 1 to 5, further comprising 0.01 parts by mass to 5 parts by mass of at least one sulfur compound (d) selected from the group consisting of thiol compounds I and disulfide compounds J.

7. The polymerizable composition according to any one of claims 1 to 6, wherein the Rf is a group of Formula [8]:
**•-(CH₂)ᵣ-(CF₂)ₛ-X** [8]
(where X is a hydrogen atom or a fluorine atom; r is an integer of 0 to 2; s is an integer of 1 to 6; and a black dot is a bond to a silicon atom).

8. The polymerizable composition according to any one of claims 1 to 7, wherein the diarylsilicic acid compound A is diphenylsilanediol, the alkoxy silicon compound B is a compound of Formula [2a], and the alkoxy silicon compound C is a compound of Formula [3a]: 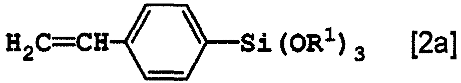 (where R¹ is the same as that defined above)
Rf-Si (OR³) ₃ [3a]
(where Rf and R³ are the same as those defined above).

9. The polymerizable composition according to any one of claims 1 to 8, wherein the polycondensation molar ratio of the alkoxy silicon compound B to the alkoxy silicon compound C is in a range of from 99.9:0.1 to 90:10.

10. A cured product obtained by polymerizing the polymerizable composition as claimed in any one of claims 1 to 9.

11. An optical lens obtained by polymerizing the polymerizable composition as claimed in any one of claims 1 to 9.

12. A material for high refractive index resin lenses, the material comprising the polymerizable composition as claimed in any one of claims 1 to 9.

13. A reactive silicone compound obtained by polycondensation, in the presence of an acid or a base, of a polycondensable compound containing at least a diarylsilicic acid compound A of Formula [1], an alkoxy silicon compound B of Formula [2], and an alkoxy silicon compound C of Formula [3], at a molar ratio of (diarylsilicic acid compound A) / (alkoxy silicon compound B + alkoxy silicon compound C) of not less than 0.9 and less than 1.1: 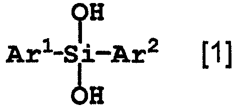 (where Ar¹ and Ar² are independently a phenyl group optionally substituted with a C1-6 alkyl group, or a naphthyl group optionally substituted with a C₁₋₆ alkyl group)
**Ar³-Si (OR¹)ₐR²₃₋ₐ** **[2]**
(where Ar³ is a phenyl group having at least one group having a polymerizable double bond, or a naphthyl group having at least one group having a polymerizable double bond; R¹ is methyl group or ethyl group; R² is methyl group, ethyl group, or vinylphenyl group; and a is 2 or 3)
**Rf-Si(OR³)_{b}R⁴_{3-b}** **[3]**
(where Rf is a C₁₋₁₂ fluoroalkyl group; R³ is methyl group or ethyl group; R⁴ is methyl group, ethyl group, or vinylphenyl group; and b is 2 or 3).
